# EUROPEAN PATENT APPLICATION

(11) **EP 4 668 433 A1**
(43) Date of publication of application: **24.12.2025**
(21) Application number: 25153554.8
(22) Date of filing: 23.01.2025
(51) Int. Cl.: H01M 50/209, H01M 50/242, H01M 50/291, H01M 50/293, H01M 50/593

(54) **INSULATOR AND BATTERY MODULE**

(30) Priority: 17.06.2024 CN 202421385710 U; 12.08.2024 WO PCT/CN2024/111379
(71) Applicant: Eve Energy Co., Ltd., Huizhou, Guangdong 516006 (CN)
(72) Inventor: DING, Xunfeng, Huizhou, 516006 (CN); ZHOU, Hongquan, Huizhou, 516006 (CN)
(74) Representative: Berggren Oy

(57) **Abstract**

An insulator and a battery module are provided in the application. The insulator includes: an insulating plate including a body and protrusions, wherein the protrusions are provided at two ends of at least one side surface of the body, and a mounting portion is formed between the protrusions at the at least one side surface of the body ; and a heat insulation plate provided in the mounting portion, wherein a height of a side of the heat insulation plate away from the body is lower than heights of sides of the protrusions away from the body.

## Description

### TECHNICAL FIELD

The present application relates to the technical field of batteries, and more particularly, to an insulator and a battery module.

### BACKGROUND

In the related art, a battery module generally includes battery cells, end plates, and insulators. The battery cells are arranged at intervals in one direction sequentially. The two end plates are respectively located at opposite ends of the battery cells in the arrangement direction thereof. The insulator are arranged between the battery cell and the end plate.

### SUMMARY

However, the conventional insulator is closely attached to the battery cell, and the battery cell expands during the cycle of the battery cell. So, only one side of the battery cell near a side of the end plate is provided with an expansion space, and both sides of the battery cell near the middle position are provided with an expansion space. As a result, the attenuation of the battery cell near the side of the end plate is much faster than that of the battery cell near the middle position, thereby shortening the cycle lives of both the module and the battery pack.

Accordingly, there is an urgent need to design an insulator and a battery module to address technical challenges.

In a first aspect, the present application provides an insulator. The insulator includes an insulating plate including a body and protrusions, in which the protrusions are provided at two ends of at least one side surface of the body, and a mounting portion is formed between the protrusions at the at least one side surface of the body ; and a heat insulation plate provided in the mounting portion, wherein a height of a side of the heat insulation plate away from the body is lower than heights of sides of the protrusions away from the body.

In a second aspect, according to embodiments of the present application, it is provided a battery module. The battery module includes a battery cell assembly including a plurality of battery cells spaced apart; two end plates respectively disposed at two ends of the battery cell assembly; and the above insulator, in which the insulator is provided between a corresponding one of the end plates and the battery cell assembly.

### BENEFICIAL EFFECT

In the insulator provided in the present application, the heat insulation plate is arranged in the mounting portion, and the height of a side of the heat insulation plate away from the body is lower than the heights of sides of the protrusions away from the body. In this arrangement, when the sides of the protrusions away from the body are connected to the battery cell through the fixing members, there is a spacing between the heat insulation plate and the battery cell. After the battery cell close to the end plate side expands, the side of the battery cell close to the end plate can have expansion space, thereby ensuring that there are expansion spaces at two sides of the battery cell close to the end plate. In this way, the attenuation of the battery cell close to the end plate is similar to the attenuation of the battery cell in the middle position, thereby ensuring the attenuation consistency of the battery cells, which is beneficial to extending the cycle lives of both the module and the battery pack.

In the battery module provided in the present application, it can ensure the stability of the battery cell assembly during operation by providing an insulating member between the end plate and the battery cell assembly.

### BRIEF DESCRIPTION OF THE DRAWINGS

FIG. 1 is a perspective view of an insulator according to embodiments of the present application;
FIG. 2 is a schematic side view of an insulator according to embodiments of the present application;
FIG. 3 is a schematic structural diagram of a battery module according to embodiments of the present application;
FIG. 4 is an enlarged schematic diagram at detail A in FIG. 3; and
FIG. 5 is a schematic side view of a heat insulator according to embodiments of the present application.

### Reference signs:

10. insulating plate; 11. body; 12. protrusion; 13. mounting portion;
20. heat insulation plate;
30. fixing member;
40. battery cell;
50. end plate;
60. heat insulator; 61. heat insulating sheet; 62. insulation sheet; 63. connecting member; and X, width direction.

### DETAILED DESCRIPTION

In the following, the technical solutions in the embodiments of the present application will be clearly and completely described in connection with the accompanying drawings in the embodiments of the present application. It will be apparent that the described embodiments are merely a part of the embodiments of the present application, rather than all the embodiments. Based on the embodiments in the present application, all other embodiments obtained by a person skilled in the art without involving any inventive effort are within the scope of the present application.

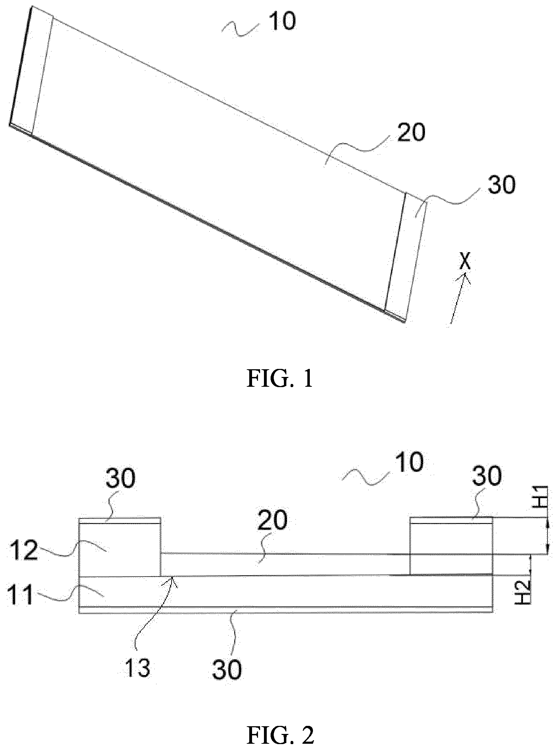

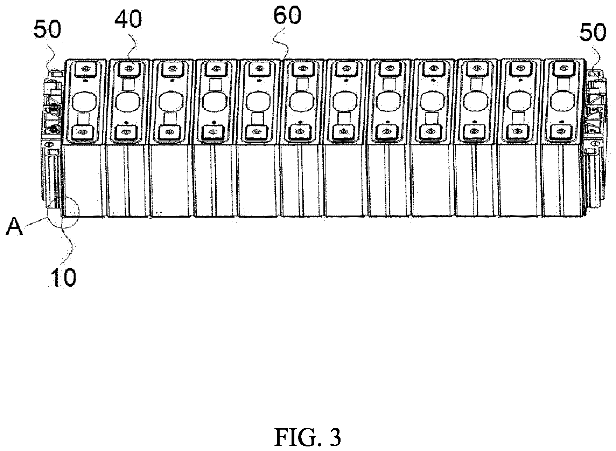

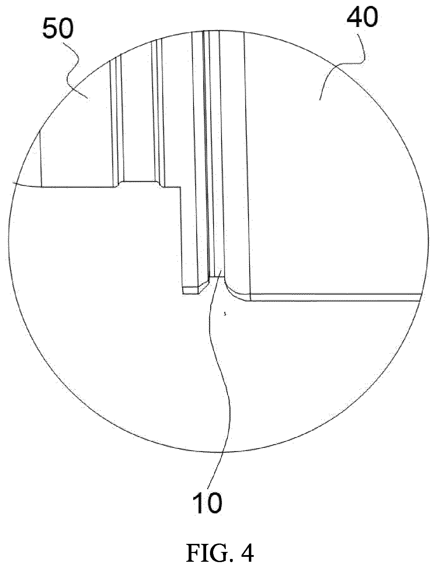

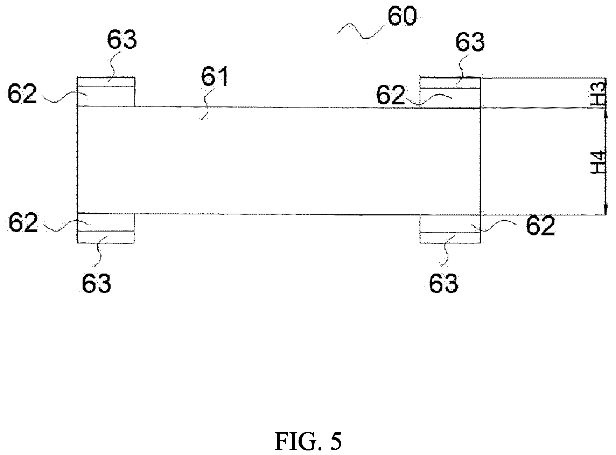

As shown in FIGS. 1 to 5, in a first aspect, according to embodiments of the present application, it is provided an insulator including an insulating plate 10 and a heat insulation plate 20. The insulating plate 10 includes a body 11 and protrusions 12. The protrusions 12 are provided at two ends of the body 11. A mounting portion 13 is formed between the two protrusions 12 at a side surface of the body 11 which is adjacent to the protrusions 12. The heat insulation plate 20 is provided in the mounting portion 13. A height of a side surface of the heat insulation plate 20 which is away from the body 11 is lower than a height of a side surface of the protrusion 12 which is away from the body 11.

In the technical solution of the present application, the heat insulation plate 20 is provided in the mounting portion 13, and the height of the side surface of the heat insulation plate 20 remote from the body 11 is lower than the height of the side surface of the protrusion 12 remote from the body 11. In this way, when the sides of the protrusions 12 which is away from the body 11 is connected to the battery cell 40 through the fixing members 30, there is a spacing between the heat insulation plate 20 and the battery cell 40. After the expansion of the battery cell 40 adjacent to the end plate 50, an expansion space is formed at the side of the battery cell 40 which is adjacent to the end plate 50, thereby ensuring that the expansion spaces are formed at two sides of the battery cell 40 adjacent to the end plates 50. Thus, the attenuation of the battery cell 40 near the side of the end plate 50 tends to be the same as the attenuation of the battery cell 40 at the middle position, thereby ensuring that the attenuation of the battery cells 40 is consistent, and thus prolonging the cycle lives of both the battery module and the battery pack.

In the present application, the fixing member 30 is in particular a double-sided adhesive tape, since the double-sided adhesive tape has the following characteristics.
1. Strong adhesiveness: since the double-sided adhesive tape has excellent adhesiveness, it is possible to ensure the connection strength between the insulator and the battery cell 40, and between the insulator and the end plate 50.
2. Operational simplicity: in the present application, only one side of the double-sided adhesive tape is attached to the insulating plate 10, and the other side of the double-sided adhesive tape is attached to the battery cell 40 or the end plate 50 at the time of installation.
3. High aesthetic appearance: the adhesive surfaces of the double-sided adhesive tape are generally relatively flat, and thus it can maintain the neatness and the beautiful appearance of the bonded material. At the same time, the color and the thickness of the double-sided adhesive tape may be selected in various ways. The color and the thickness of the double-sided adhesive tape may be selected according to specific requirements, thereby improving the overall aesthetic appearance.
4. Lower cost: the price of double-sided adhesive tape is generally more affordable with respect to other adhesives, thereby making it more cost-effective. In addition, the double-sided adhesive tape has a long service life, so that the storage cost and the production cost of the material can be reduced.
5. Good environmental protection: with the improvement of environmental protection consciousness, more and more double-sided glue products are starting to be made of environmental protection materials, thereby reducing pollution to the environment.

In other embodiments of the present application, the fixing member 30 may also be provided as a liquid glue or a hot melt glue.

Specifically, the protrusions 12 are provided on one side of the insulator provided between the end plate 50 and the battery cell 40. The insulator further includes a fixing member 30. The fixing member 30 is provided on a side of the body 11 remote from the protrusions 12. The fixing member 30 is further provided on a side of the protrusion 12 remote from the body 11. A side of the body 11 remote from the protrusions 12 is fixedly connected to the end plate 50 of battery through the fixing member 30.

A side of the protrusion 12 remote from the body 11 is connected to the battery cell 40 through the fixing member 30. A height difference between a height of a side of the heat insulation plate 20 remote from the body 11 and a height of the side, which is remote from the body 11, of the fixing member 30 located on the protrusion 12 is denoted by H1, and satisfies 0mm<H1≤3mm. When the height difference H1 is greater than 3mm, the height difference between the side of the heat insulation plate 20 far away from the body 11 and the side, which is far away from the body 11, of the fixing member 30 on the protrusion 12 is too large. In this way, it may cause the spacing between the heat insulation plate 20 and the battery cell 40 to be too large, which is not conducive to the heat insulation plate 20 to insulate the battery cell 40. Thus, the heat insulating effect of the heat insulation plate 20 is reduced. Therefore, the height difference is set to satisfy 0mm<H1≤3mm, so that the heat insulating effect of the heat insulation plate 20 is ensured, and the battery cell 40 close to the end plate 50 is ensured to have a certain expansion space. Alternatively, the height difference H1 may be set to 1 mm, 2 mm, 3 mm, or the like. The specific setting of the height difference should be selected according to the use environment of the device, so that the applicable range of the device can be improved.

Further, a thickness of the heat insulation plate 20 is denoted by H2, and satisfies 0mm<H2≤2mm. When the thickness H2 is greater than 2mm, the thickness of the heat insulation plate 20 is excessively thick, thereby increasing the material required for production, which increases the production cost of the structure and thus is inconvenient for mass production of the device. Therefore, the thickness H2 is set to satisfy 0mm<H2≤2mm, so that not only the heat insulation effect of the heat insulation plate 20 is ensured, but also the production cost of the components is reduced.

Specifically, the fixing member 30 on the side of the body 11 which is remote from the protrusions 12 covers over the body 11. With this arrangement, the contact area between the insulator and the end plate 50 can be increased, so that the connection strength between the insulator and the end plate 50 can be improved, and the stability of the device during operation can be ensured.

Further, the body 11 and the protrusion 12 are in a split structure. In the present application, the body 11 is a PC board, and the protrusion 12 is a PC strip. The full English name of PC is Polycarbonate, which is a thermoplastic engineering plastic having very high mechanical properties, optical properties, electrical properties, and thermal properties. The molecular chain of Polycarbonate contains carbonate groups, which can be classified into aliphatic, cycloaliphatic, and aliphatic-aromatic types according to the different ester groups in the molecular structure. Among them, aromatic polycarbonate has practical value, and bisphenol A type polycarbonate is the most important.

The PC material has excellent heat resistance and high heat deformation temperature, and can withstand high temperature environment. The maximum withstanding temperature of the PC material may vary according to different data records, but may generally reach 140°C or even 160°C. Therefore, the stability of the device during operation can be ensured.

Of course, in other embodiments of the present application, the body 11 and the protrusion 12 may be provided in an integrally molded structure so long as the requirements for use of the device can be met. Meanwhile, the materials of the body 11 and the protrusions 12 may be PP, and the full English name of PP is polypropylene, which is a thermoplastic synthetic resin with excellent performance and is a colorless and translucent thermoplastic light-weight general purpose plastic. It has the following distinct characteristics.
1. Lightweight: PP material is low in density and therefore the weight of the PP material is light, which makes PP material advantageous in application requiring lightweight.
2. Heat resistance: PP material has good heat resistance, and thus can withstand high temperatures without easy melting or deformation, which makes the PP material possible to maintain stable property in high temperature environment.
3. Corrosion resistance: PP material has good corrosion resistance for many chemicals and solvents, so the PP material can maintain stable property in a variety of harsh environments.
4. Electrical property: PP material has excellent electrical insulation property and is suitable for electrical and electronic applications.

In addition, the PP material also has high strength mechanical property and good high abrasion resistance and processing properties. Therefore, the PP material can meet the use requirements of the device.

Specifically, the heat insulation plate 20 includes foam or aerogel. Among them, the foam may be a material such as silica gel foam, Microcellular Polypropylene (referred briefly to as MPP) foam, or Extruded Polypropylene (referred briefly to as XPP) foam. The silica gel foam is a foamed sponge-like silicone material formed by foaming polysiloxane, and has excellent characteristics such as high flame retardancy, aging resistance, super waterproofness, super dustproofness, lightweight, insulation, high or low temperature resistance, and the like. The useful life of the silica gel foam is 3 to 5 times that of conventional foam materials, and is also significantly superior to conventional foam materials in terms of comfort, foam density, and environmental protection. Silica gel foams are widely used in the sealing of the lithium battery box in the new energy vehicle and shock absorption of the bottom portion of the lithium battery box, shock absorption materials of liquid cooling systems of new energy vehicles, support and shock absorption of suspended floors of the high-speed rail, lightweight sealing materials for aerospace, and sealing of instruments such as 5G signal towers. In addition, in the building field, silica gel foam is widely used for its excellent sound insulation, shock absorption and waterproof properties.

MPP foam, i.e., Microcellular Polypropylene material, has a pore size of less than 100 microns. The MPP foam is even more strictly defined as having the pore size of less than 10 microns, and having a pore density greater than 10 to the power of 9 per cubic centimeter. MPP foam is widely used in various industrial products, consumer products and building materials due to its light weight, heat insulation, sound absorption, shock resistance, corrosion resistance, low thermal conductivity, and the like.

Aerogel is a new type of nano-scale porous solid material. The volume of all pores of the aerogel together accounts for the vast majority of the total aerogel volume, even up to 99% or more. The aerogel material has special microstructure characteristics such as high specific surface area, high porosity, nanoscale pores, low density and the like. The aerogel material is stable in chemical performance, low in thermal conductivity, high in high temperature resistance, high in elasticity, strong in adsorption, good in waterproof effect, wide in use temperature range and long in service life.

There are a variety of methods for preparing aerogels, including a sol-gel method, a supercritical drying method, a gel injection molding method, a vacuum impregnation method, a vapor deposition method, and the like. Among them, the sol-gel method is one of the most commonly used methods. The supercritical drying law effectively prevents shrinkage of sol and gel and collapse of the pore channel, resulting in a aerogel with high porosity.

Aerogels have a wide range of applications. In terms of environmental treatment, the aerogel may be used in the fields of oil-water separation, water treatment, air purification, and the like, such as treatment of industrial wastewater, and purification of harmful substances in indoor air. In terms of acoustic waves quarantine, aerogels can be used to manufacture sound insulation plates, sound processing equipment, and the like, due to their pore structure and low density. In addition, aerogels can also be combined with other materials to make lightweight composites for use in the fields of automobiles, aerospace, and the like to reduce the weight of the materials. In terms of electronic device protection, aerogels can be used to reduce the effects of temperature variations and vibrations on electronic devices. In the field of biomedicine, aerogels can be applied in aspects of drug slow release, tissue engineering, artificial organs, and the like.

Therefore, by selecting the above-mentioned material, the heat insulation plate 20 can not only satisfy the heat insulation function of the battery cells 40, reduce the heat transfer from the battery cells 40 to the end plates 50, improve the temperature difference between the battery cell 40 adjacent to the end plate 50 and the battery cell 40 at the middle of the module, but also reduce the production cost of the module.

Specifically, the extension length of the protrusion 12 in a width direction of the body 11 is smaller than or equal to the width of the body 11. With this arrangement, it is possible not only to satisfy the use requirements of the insulator, but also to reduce the material required for the production of the protrusion 12 to a certain extent, thereby reducing the production cost of the assembly and facilitating the batch production of the assembly.

Further, the protrusions 12 are of a multi-section structure, and are arranged at intervals in the width direction of the body 11, or the protrusions 12 are of an integrally molded structure. With this arrangement, it is possible to provide the protrusions 12 in different environments according to the insulator, thereby improving the applicability and the application range of the insulator.

Specifically, the protrusions 12 are provided on two sides of the insulator provided between the two adjacent battery cells 40, and the insulator further includes a fixing member 30. The fixing member 30 is provided on the side of the protrusion 12 remote from the body 11. By providing the above-described structure, when the battery cell 40 is expanded, the insulator can provide the expansion space for the battery cell 40 in time, thereby absorbing a part of the expansion force of the battery cell 40, and reducing the probability of structural damage of the insulator, which further prolongs the service life of the insulator.

In a second aspect, according to embodiments of the present application, it is provided a battery module including a battery cell assembly including a plurality of battery cells 40 arranged at intervals; two end plates 50 provided at two ends of the battery cell assembly, respectively; and the above-described insulator provided between the end plate 50 and the battery cell assembly.

Further, the battery module further includes a heat insulator 60 provided between the end plate 50 and the battery cell 40 and/or between two adjacent battery cells 40. With this arrangement, the heat insulation effect of the battery cell 40 can be ensured, thereby facilitating the maintenance of the stability of the device during operation.

Specifically, the heat insulator 60 includes a heat insulating sheet 61, insulation sheets 62 and connecting members 63. The insulation sheets 62 are provided on two sides of the heat insulating sheet 61 opposite to the battery cell 40. The insulation sheets 62 are located at two ends of each side of the insulating sheet 61. The connecting member 63 is provided on a side of the insulation sheet 62 remote from the heat insulating sheet 61. Among them, the heat insulator 60 is connected to two battery cells 40 adjacent thereto through the connecting members 63.

In one embodiment, a height sum of both the insulation sheet 62 and the connecting member 63 on the insulation sheet 62 is denoted by H3, and satisfies 0mm<H3≤3mm. The height of the insulating sheet 61 is denoted by H4, and satisfies 1mm≤H4≤4mm. In the present application, the height difference H1 is equal to the height sum H3, so that it is possible to ensure that two sides of the battery cell 40 close to the end plate 50 have the same expansion spaces as two sides of the battery cell 40 at the intermediate position, thereby facilitating prolonging the cycle life of the device.

Further, the heat insulator 60 provided between the end plate 50 and the battery cell 40 includes the heat insulating sheet 61, the insulation sheets 62 and the connecting members 63. The insulation sheets 62 are provided at two ends of one side of the insulating sheet 61 opposite to the battery cell 40. The connecting member 63 is provided at the side of the insulation sheet 62 remote from the insulating sheet 61 and at a side of the heat insulating sheet 61 close to the end plate 50. With this arrangement, it is possible not only to ensure the stability of the heat insulator 60 in connection with the end plate 50, but also to provide an expansion space for the battery cell 40. So, a part of the expansion force of the battery cell 40 can be absorbed, thereby reducing the probability of structural damage of the heat insulator 60, and thus prolonging the service life of the heat insulator 60.

In the present application, in order to ensure that the expansion spaces of all the battery cells 40 in the end-of-life battery module are kept uniform, it is necessary to ensure that the thickness H2 of the heat insulation plate 20 of the end-of-life insulating plate 10 multiplying by the compression ratio Y% of the heat insulation plate 20 is equal to a half of the height H4 of the heat insulating sheet 61 multiplying by the compression ratio X% of the heat insulating sheet 61.

According to the present application, the heat insulation plate 20 is provided in the mounting portion 13 so that the height of the side of the heat insulation plate 20 remote from the body 11 is lower than the height of the side of the protrusion 12 remote from the body 11. With this arrangement, when the sides of the protrusions 12 remote from the body 11 are connected to the battery cell 40 through the fixing members 30, there is a spacing between the heat insulation plate 20 and the battery cell 40. After the expansion of the battery cell 40 near the side of the end plate 50, the expansion space of the side of the battery cell 40 adjacent to the end plate 50 can be formed, thereby ensuring that the expansion spaces are formed at two sides of the battery cell 40 near the end plate 50. In this way, the attenuation of the battery cell 40 near the end plate 50 tends to be the same as the attenuation of the battery cells 40 at the middle position, thereby ensuring that the attenuation of the battery cells 40 is consistent, and further prolonging the cycle lives of both the module and the battery pack.

It should be noted that the terms used here are only for describing specific embodiments, and are not intended to limit the exemplary embodiments according to the present application. As used herein, unless the context clearly indicates otherwise, the singular form is also intended to include the plural form. In addition, it should be understood that when the terms "comprise" and/or "include" are used in this specification, it indicates that there are features, steps, operations, devices, components and/or combinations thereof. Unless otherwise specifically stated, the relative arrangement of the parts and the steps described in these embodiments, the numerical expressions and numerical values do not limit the scope of the present application. At the same time, it should be understood that for ease of description, the sizes of the various parts shown in the drawings are not drawn according to the actual proportional relationship. The techniques, methods and equipment known to ordinary technicians in the relevant field may not be discussed in detail, but in appropriate cases, the techniques, methods and equipment should be regarded as part of the authorized specification. In all examples shown and discussed here, any specific value should be interpreted as being merely exemplary, not as a limitation. Therefore, other examples of the exemplary embodiments may have different values. It should be noted that similar reference numerals and letters represent similar items in the following figures, so once an item is defined in one figure, it does not need to be further discussed in subsequent figures.

In the description of the present application, it should be understood that the directions or positional relationships indicated by directional words such as "front, back, up, down, left, and right", "lateral, vertical, perpendicular, and horizontal" and "top, and bottom" are usually based on the directions or positional relationships shown in the drawings, and are only for the convenience of describing the present application and simplifying the description. Unless otherwise specified, these directional words do not indicate or imply that the device or element referred to must have a specific direction or be constructed and operated in a specific direction, and therefore cannot be understood as limiting the scope of protection of the present application. The directional words "inside and outside" refer to the inside and the outside relative to the contours of each component itself.

For ease of description, spatially relative terms such as "on", "above", "on the upper surface of", "upper", etc. may be used here to describe the spatial positional relationship between a device and other devices, or a feature and other features as shown in the figures. It should be understood that spatially relative terms are intended to include different orientations of the device in use or operation in addition to the orientation described in the figures. For example, if the device in the accompanying drawings is inverted, the device described as "above other devices or structures" or "on other devices or structures" will be positioned as "below other devices or structures" or "beneath other devices or structures". Thus, the exemplary term "above" may include both "above" and "below". The device may also be positioned in other different ways (rotated 90 degrees or in other orientations), and the spatially relative descriptions used here are interpreted accordingly.

In addition, it should be noted that the use of terms such as "first" and "second" to limit components is only for the convenience of distinguishing the corresponding components. Unless otherwise stated, the above terms have no special meaning and therefore cannot be understood as limiting the scope of protection of this application.

The above description is only the preferred embodiments of the present application and is not intended to limit the present application. For those skilled in the art, the present application may have various modifications and variations. Any modification, equivalent replacement, improvement, etc. made within the spirit and the principle of the present application shall be included in the protection scope of the present application.

## Claims

1. An insulator comprising:
an insulating plate (10) including a body (11) and protrusions (12), wherein the protrusions are provided at two ends of at least one side surface of the body, and a mounting portion (13) is formed between the protrusions at the at least one side surface of the body ; and
a heat insulation plate (20) provided in the mounting portion, wherein a height of a side of the heat insulation plate away from the body is lower than heights of sides of the protrusions away from the body.

2. The insulator according to claim 1, wherein the protrusions are configured to arrange on the at least one side surface of the insulator provided between an end plate (50) and a battery cell (40), the insulator further comprises fixing members (30), at least one of the fixing members is provided on a side of the body away from the protrusions, and ones of the fixing member are provided on the sides of the protrusions away from the body.

3. The insulator according to claim 2, wherein a height difference between the height of the side of the heat insulation plate away from the body and a height of each of sides, which are away from the body, of the ones of the fixing members on the protrusions is denoted by H1 and satisfies 0mm<H1≤3mm, and/or a thickness of the heat insulation plate is denoted by H2 and satisfies 0mm<H2≤2mm.

4. The insulator according to claim 2 or 3, wherein the at least one of the fixing members on the side of the body away from the protrusions covers over the body.

5. The insulator according to any one of claims 2 to 4, wherein the body and the protrusions are in a split structure, or the body and the protrusions are in an integral molded structure.

6. The insulator according to any one of claims 1 to 5, wherein the heat insulation plate comprises foam or aerogel.

7. The insulator according to any one of claims 1 to 6, wherein an extension length of each of the protrusions in a width direction (X) of the body is less than or equal to a width of the body.

8. The insulator according to any one of claims 1 to 6, wherein the protrusions are of a multi-section structure and arranged at intervals in a width direction of the body, or the protrusions are of an integrally molded structure.

9. The insulator according to claim 1, wherein the protrusions are provided on two sides of the insulator configured to be provided between two adjacent battery cells, and the insulator further comprises fixing members, and ones of the fixing members are provided on the sides of the protrusions away from the body.

10. A battery module comprising:
a battery cell assembly comprising a plurality of battery cells (40) spaced apart;
two end plates (50) respectively disposed at two ends of the battery cell assembly; and
the insulator according to any one of claims 1 to 11, wherein the insulator is provided between a corresponding one of the end plates and the battery cell assembly.

11. The battery module according to claim 10, further comprising a heat insulator (60) provided between the end plate and a corresponding one of the plurality of the battery cells and/or between two adjacent of the plurality of battery cells.

12. The battery module according to claim 11, wherein the heat insulator disposed between the two adjacent battery cells comprises:
a heat insulating sheet (61); and
insulation sheets (62) provided on two sides of the heat insulating sheet opposite to the two adjacent battery cells, wherein the insulation sheets are located at two ends of each of the two sides of the heat insulating sheet, and a connecting member (63) is provided on a side of each of the insulation sheets away from the heat insulating sheet;
wherein the heat insulator is connected to the two adjacent battery cells through the connecting member.

13. The battery module according to claim 12, wherein a height sum of a height of the insulation sheet and a height of the connecting member on the insulation sheet is denoted by H3 and satisfies 0mm<H3≤3mm, and a height of the heat insulating sheet is denoted by H4 and satisfies 1mm≤H4≤4mm.

14. The battery module according to claim 11, wherein the heat insulator provided between the end plate and the battery cell comprises:
a heat insulating sheet (61);
insulation sheets (62) provided at two ends of a side of the heat insulating sheet opposite to the battery cell, and sides of the insulation sheets away from the heat insulating sheet and a side of the heat insulating sheet adjacent to the end plate are each provided with a connecting member (63).

15. The battery module according to claim 13, wherein the height difference and the height sum satisfy H1=H3.
